# EUROPEAN PATENT SPECIFICATION

(11) **EP 3 250 410 B1**
(45) Date of publication and mention of the grant of the patent: **30.06.2021**
(21) Application number: 16702079.1
(22) Date of filing: 28.01.2016
(51) Int. Cl.: B60K 35/00, B60R 1/00

(54) **METHOD FOR OPERATING A DRIVER ASSISTANCE SYSTEM OF A MOTOR VEHICLE WITH DISPLAY OF ENVIRONMENTAL DATA IN AN AUTONOMOUS DRIVE MODE, DRIVER ASSISTANCE SYSTEM AS WELL AS MOTOR VEHICLE**
VERFAHREN ZUM BETREIBEN EINES FAHRERASSISTENZSYSTEMS EINES KRAFTFAHRZEUGS MIT ANZEIGE VON UMWELTDATEN IN EINEM AUTONOMEN FAHRMODUS, FAHRERASSISTENZSYSTEM SOWIE KRAFTFAHRZEUG
PROCÉDÉ DE FONCTIONNEMENT D'UN SYSTÈME D'AIDE À LA CONDUITE D'UN VÉHICULE À MOTEUR AVEC AFFICHAGE DE DONNÉES ENVIRONNEMENTALES DANS UN MODE DE CONDUITE AUTONOME, SYSTÈME D'AIDE À LA CONDUITE AINSI QUE VÉHICULE À MOTEUR

(30) Priority: 28.01.2015 DE 102015101183
(43) Date of publication of application: 06.12.2017
(73) Proprietor: Valeo Schalter und Sensoren GmbH, 74321 Bietigheim-Bissingen (DE)
(72) Inventor: REILHAC, Patrice, 74321 Bietigheim-Bissingen (DE)
(74) Representative: Pothmann, Karsten
(86) International application number: PCT/EP2016/051759
(87) International publication number: WO 2016/120363

(56) References cited:
- EP-A2- 1 672 588
- WO-A2-2015/014894
- DE-A1-102012 019 507
- DE-A1-102012 021 420
- FR-A1- 2 902 381

## Description

The present invention relates to a method for operating a driver assistance system of a motor vehicle, in which the motor vehicle is autonomously maneuvered in an autonomous drive mode by means of the driver assistance system and display data is displayed to the driver of the motor vehicle by means of a display device, wherein the display data is displayed to the driver in a central field of view upon viewing the display device. In addition, the invention relates to a driver assistance system for a motor vehicle. Finally, the present invention relates to a motor vehicle.

Presently, the interest is in particular directed to driver assistance systems for motor vehicles, which assist the driver in driving the motor vehicle. Therein, driver assistance systems are known from the prior art, which allow both an autonomous and a manual drive mode of the motor vehicle. In the autonomous drive mode, the motor vehicle can capture the environment of the motor vehicle with the aid of various sensors of the driver assistance system and at least semi-autonomously control the motor vehicle. To this, the driver assistance system can for example perform an intervention in the steering, the brake system and/or a drive engine. In this case, the driver assistance system takes over the longitudinal guidance and/or the lateral guidance of the motor vehicle. In the manual drive mode, the driver takes over both the longitudinal guidance and the lateral guidance of the motor vehicle.

Therein, from the prior art, it is further known to provide corresponding display data to the driver on a display device of the motor vehicle during the autonomous drive mode. This display data can for example be provided from an information and/or entertainment system of the motor vehicle. For example, text contents, image data or video data can be provided to the driver on the display device. Thus, it is allowed to the driver to watch movies, read magazine articles or read emails during the autonomous drive mode of the motor vehicle. Therein, driver assistance systems are also known, in which the dashboard or the display device is changed upon a transition from the autonomous drive mode to the manual drive mode. Therein, the display device can be moved from a use position into a stowage position. Herein, it is additionally known that for example the seating position of the driver is changed upon the transition from the autonomous drive mode to the manual drive mode.

If the driver views the display data on the display device during the autonomous drive mode, this can result in motion sickness. The motion sickness is caused by a conflict of the information determined by the sensory organs of the driver. This conflict is motion- and/or acceleration-related if the driver feels acceleration forces in the motor vehicle, which do not correlate with his visual perception of the environment. Because the brain of a human provides information both about the whereabouts and the proper motion of the human. This information is continuously refreshed based on the visual information of the eyes and the acceleration perception of the vestibular system. If the information generated by these two sensory organs is contradictory, the brain cannot refresh the information about position and motion, which results in confusion about the own body position and thus result in the symptom of motion sickness, which is also referred to as kinetosis. The motion sickness can imply dizziness, headache, nausea and/or vomition.

To this, DE 101 56 219 C1 proposes to provide image signals to a passenger of a means of transport via optical reproducing devices during travel for reducing the kinetosis effect, which are modified depending on drive-specific motion data such that the visual impression of the viewed images is correlated with the currently subjectively perceived position and motion values for the passenger. To this, signals of motion and position sensors are evaluated by a data processing device and the image signals present in digital form are correspondingly modified for the reproduction. Drive-related position variations thus for example result in corresponding variations of the image data in the reproduction, acceleration in a variation of the image size. Therein, the presented images can be commercial movies or also artificially generated or overlaid virtual environmental impressions.

FR2902381 A1 discloses a motor vehicle driving assisting method, which involves merging an image captured by an image formation device and a synthesis image and displaying the merged image.

It is the object of the present invention to demonstrate a solution, how a driver assistance system of the initially mentioned kind can be more securely operated.

According to the invention, this object is solved by a method, by a driver assistance system as well as by a motor vehicle having the features according to the respective independent claims 1 and 10. Advantageous implementations of the invention are the subject matter of the dependent claims, of the description and of the figures.

A method according to the invention serves for operating a driver assistance system of a motor vehicle. Herein, the motor vehicle is autonomously maneuvered in an autonomous drive mode by means of the driver assistance system. In addition, display data is displayed to the driver of the motor vehicle during the autonomous drive mode by means of a display device. Therein, the display data is displayed to the driver in a central field of view upon viewing the display device. Further, an environmental region of the motor vehicle is captured by means of a sensor device and environmental data is additionally displayed by means of an environmental display device, which describes the environmental region captured by the sensor device. Herein, the environmental data is displayed in a peripheral field of view upon viewing the display device.

The method serves for operating a driver assistance system, by means of which the driver can be assisted in driving the motor vehicle. By the driver assistance system, the motor vehicle can be autonomously maneuvered in an autonomous drive mode. The motor vehicle can also be operated in semi-autonomous or partially automated manner with the aid of the driver assistance system. During the autonomous drive mode, the driver assistance system can capture the environmental region of the motor vehicle with the aid of corresponding sensors. In addition, with the aid of the driver assistance system or a corresponding positioning system of the driver assistance system, the current position of the motor vehicle can be determined. Moreover, the driver assistance system can include a corresponding navigation device, by which a route for the motor vehicle can be determined. Thus, the driver assistance system can perform an intervention in the steering, the brake system and/or a drive engine depending on the environment, the current position of the motor vehicle and/or based on the navigation data. In this manner, the motor vehicle can for example be maneuvered from a start point to a destination point without collision. The driver assistance system can additionally allow a manual operation of the motor vehicle. Herein, the driver takes over both the longitudinal guidance and the lateral guidance of the motor vehicle. In other words, the driver steers the motor vehicle and actuates the accelerator and the brake pedal.

During the autonomous drive mode, display data is provided to the driver by means of the display device. This display data can for example be image data or video data. For example, image data or video data can be provided to the driver by means of the display device. The display device can also be used to provide contents of Internet pages. Therein, the display device is disposed in the interior of the motor vehicle such that the display data is arranged in a central field of view of the driver if he directs his view to the display device. In other words, the display data is displayed to the driver in the central field of view with a view to the display device.

Further, it is provided that environmental data is provided by means of a sensor device, which describes the environmental region of the motor vehicle. This environmental data is additionally displayed to the driver by means an environmental display device. The environmental display device is disposed in the interior of the motor vehicle such that the environmental data is displayed to the driver in a peripheral field of view upon viewing the display device. Thus, the driver is able to perceive the environmental data in his peripheral field of view upon viewing the display data on the display device or upon viewing the screen content of the display device. Herein, experiments have shown that by presentations of the environmental data in the peripheral field of view, the motion sickness can be reduced or prevented for the driver. Thus, it can be achieved that the driver feels comfortable during the autonomous drive mode of the motor vehicle. Moreover, it can be achieved that the driver is aware of the environment of the motor vehicle. Thus, the driver is not adversely affected or too much distracted during the autonomous drive mode. Thereby, the safety in the operation of the motor vehicle can be increased.

Preferably, the sensor device has at least one camera, by means of which a sequence of image data of the environmental region is captured, and wherein the sequence of image data is displayed on the environmental display device as the environmental data. Such a camera can for example additionally be used to capture objects in the environmental region of the motor vehicle. The camera can thus provide data about the environment to the driver assistance system. Based on this environmental data, the motor vehicle can be autonomously maneuvered. The environmental data therefore represent a temporal succession of images of the environment. They are now virtually presented on the display device as an image sequence or as a video sequence. Thus, the environmental region can be realistically reproduced for the driver.

In an embodiment, the sensor device has a front camera as the at least one camera, by means of which a sequence of image data of the environmental region in front of the motor vehicle is captured, and/or the sensor device has a lateral camera as the at least one camera, by means of which a sequence of image data of the environmental region, which is substantially laterally next to the motor vehicle, is captured. The sensor device can have a front camera, by means of which the environment in front of the motor vehicle can be filmed. This video data can then be reproduced on the environmental display device. Alternatively or additionally, the sensor device can for example have two lateral cameras, which are disposed laterally on the motor vehicle. The environmental region next to the motor vehicle can substantially be captured by these lateral cameras. This video data describing the environmental region next to the motor vehicle can also be presented on the environmental display device.

Furthermore, it is advantageous if the sensor device includes a radar sensor, a laser sensor and/or an ultrasonic sensor and the environmental data describes at least one object in the environmental region captured by the sensor device. If the motor vehicle or the driver assistance system for example does not include a camera, distance sensors can be used to provide the environmental data. Such distance sensors can for example be a radar sensor, a laser sensor and/or an ultrasonic sensor. With the aid of these sensors, objects in the environmental region of the motor vehicle can be captured. For example, the relative position between the motor vehicle and the object can be captured. Based on this distance data, the environmental data can be determined and be presented on the environmental display device. Thus, information can be reproduced for the driver in the peripheral viewing area, which objects are in the environment of the motor vehicle. Thus, the driver can for example be made aware of objects or a corresponding warning can be output.

In an embodiment, the driver assistance system includes a head-up display device, wherein light is projected to a display element for displaying the display data and/or the environmental data and wherein a translucency of the display element is adjustable by means of an optical element. The driver assistance system can include a head-up display device, by means of which a display can be provided to the driver. The head-up display device usually includes an image generation device, by means of which light can be emitted. This light can be projected to a display element with the aid of light-refracting mirrors. This display element usually has a semi-transparent mirror surface. The display element can for example be a part of the windscreen of the motor vehicle. The display element can also be a separate combiner. Therein, the display element additionally has an optical element. By the optical element, the translucency of the display element can be adjusted. The optical element can for example include an electrochromic material, which varies its translucency by applying an electrical voltage. Therein, the optical element can in particular be controlled in the autonomous drive mode such that the display element is opaque.

Preferably, the head-up display device has a first area and at least one second area, wherein the display data is displayed in the first area and the environmental data is displayed in the at least one second area. Thus, both the display device and the environmental display device can be provided by the head-up display device. Therein, the first area of the head-up display device is selected such that it is disposed in a frontal field of view of the driver. The at least one second area is selected such that it is disposed in a peripheral viewing area of the driver.

In a further development, the display device is connected to a mobile apparatus for data transmission. In particular, the display device can be wirelessly connected to a mobile portable apparatus. Such a mobile apparatus can for example be a mobile phone, a smart phone, a portable computer and/or a tablet. Thus, via a corresponding data interface, image data and/or video data can be transmitted from the mobile apparatus to the display device. Thus, the driver can for example view image contents or video data on the display device, which is stored on the mobile terminal.

Preferably, an intervention in a steering, a brake system and/or a drive engine of the motor vehicle is performed by means of the driver assistance system for autonomously maneuvering the motor vehicle. The motor vehicle can for example be operated in different levels with respect to autonomously driving or automatization levels. Such levels are for example defined in the classification system, which was determined by the National Highway Traffic Safety Administration (NHTSA). In a level 0, the driver completely controls the motor vehicle at any time. In a level 1, for example, certain vehicle functions such as an electronic stability program or a brake assistant can be activated. In a level 2, at least two supervision devices such as for example the adaptive cruise control and a lane departure warning assistant can be operated at the same time in automated manner. In a level 3, the driver can for example transfer safety-critical functions to the supervision device under certain conditions. Herein, the motor vehicle can recognize if the conditions require that the control is again returned to the driver. A sufficiently comfortable transition time for the driver is provided. In a level 4, for example, the motor vehicle performs all of the safety-relevant functions during the entire drive, wherein the driver is not expected to control the vehicle at any time. Since the motor vehicle controls all of the functions from a start to a stop, including all of the parking functions, the motor vehicle could be operated in unoccupied manner. Presently, the motor vehicle can in particular be operated in the level 3 or in the level 4 with the aid of the driver assistance system. In particular, during these automatization levels, it can be achieved that the motion sickness is reduced and the driver is informed about his environment to this.

Preferably, a period of time, during which the motor vehicle is autonomously maneuvered, is preset by means of the driver assistance system. Here, studies have for example shown that the motion sickness for example appears after a period of time of 15 to 20 minutes. For preventing the motion sickness, it can additionally be provided that the autonomous drive mode is interrupted by the driver assistance system after a period of time of 15 to 20 minutes. Therein, it can be provided that the driver manually maneuvers the motor vehicle after this period of time. It can also be provided that a change between the automatization levels is effected after this period of time. Therein, the period of time can be correspondingly adapted to the driver. Thus, the motion sickness can be reliably prevented.

In a further development, a display is additionally provided by means of the display device during a manual drive mode of the motor vehicle. In the manual drive mode, information with respect to the current velocities or the speed of a drive engine can be presented to the driver for example with the aid of the display device. In addition, data with respect to navigation can be displayed to the driver. Thus, the display device can be used both in the autonomous and in the manual drive mode.

A driver assistance system according to the invention for a motor vehicle is adapted to perform a method according to the invention.

A motor vehicle according to the invention includes a driver assistance system according to the invention. The motor vehicle is in particular formed as a passenger car.

The preferred embodiments presented with respect to the method according to the invention and the advantages thereof correspondingly apply to the driver assistance system according to the invention as well as to the motor vehicle according to the invention.

Now, the invention is explained in more detail based on preferred embodiments as well as with reference to the attached drawings.

There show:
- Fig. 1: in schematic illustration a motor vehicle according to an embodiment of the present invention, wherein the motor vehicle has a driver assistance system; and
- Fig. 2: a display device and an environmental display device of the driver assistance system.

In the figures, identical and functionally identical elements are provided with the same reference characters.

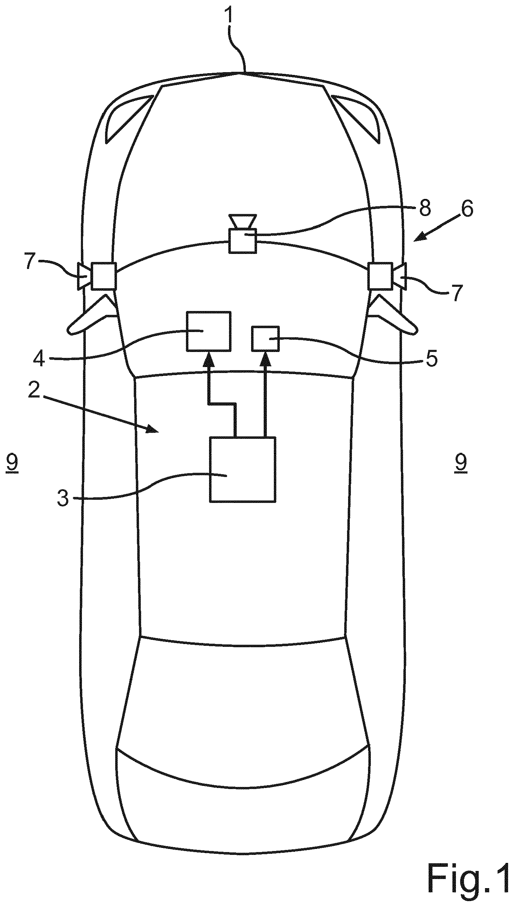

Fig. 1 shows a motor vehicle 1 according to an embodiment of the present invention in a plan view. In the present embodiment, the motor vehicle 1 is formed as a passenger car. The motor vehicle 1 includes a driver assistance system 2. The driver assistance system 2 in particular serves for assisting the driver in driving the motor vehicle 1. With the aid of the driver assistance system 2, the motor vehicle 1 can be operated in autonomous or automated manner. To this, the driver assistance system 2 can for example perform an intervention in a steering, a brake system and/or a drive engine of the motor vehicle 1.

The driver assistance system 2 includes a control device 3, which can for example be formed by an electronic controller of the motor vehicle 1. Further, the driver assistance system 2 includes a display device 4. Display data can be provided to the driver of the motor vehicle 1 by the display device 4. This display data can for example be image data or video data. The display data can also show contents of an information and/or entertainment system or a communication device of the motor vehicle 1. The display device can also be connected to a mobile apparatus, for example a smart phone or a tablet, for data transmission. Thus, image data and/or video data stored on the mobile apparatus can be displayed on the display device 4. The display data can be displayed for the driver of the motor vehicle 1 in particular during the autonomous drive mode of the motor vehicle 1.

Further, the driver assistance system 2 includes a sensor device 6. The sensor device 6 includes two lateral cameras 7 in the present embodiment. The environmental region 9 disposed substantially laterally next to the motor vehicle 1 can be captured by the lateral cameras 7. Image data or video data can be provided by the lateral cameras 7, which describes the environmental region 9. In addition, the sensor device 6 includes a front camera 8, by means of which the environmental region 9 in front of the motor vehicle 1 can be captured. By the front camera 8 too, image data or video data can be provided, which describes the environmental region 9. The lateral cameras 7 and the front camera 8 are connected to the control device 3 for data transmission. Corresponding data lines are presently not shown for the sake clarity.

With the aid of the control device 3, the image data or video data provided by the cameras 7, 8 is received. The control device 3 can additionally process or select the image data or video data. In addition, the control device 3 can transmit the image data or video data to an environmental display device 5. On the environmental display device 5, the image data or video data can then be displayed.

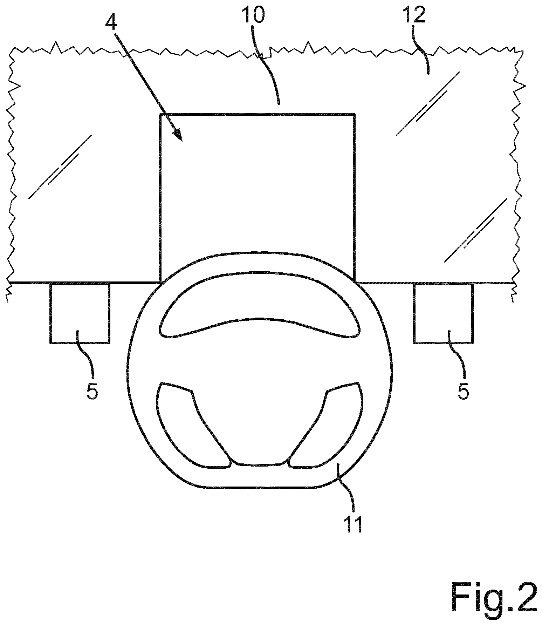

Fig. 2 shows a further embodiment of the motor vehicle 1, wherein the interior of the motor vehicle 1 is presented. Here, the driver assistance system 2 includes two environmental display devices 5, which are disposed on the right and the left side of a steering wheel 11. Further, the display device 4 is formed as a head-up display device. The display device 4 includes an image generation device not illustrated here, by means of which an image can be provided or light can be emitted. This light can be projected onto a display element 10 with the aid of corresponding mirrors. Presently, the display element 10 is formed by an area of the windscreen 12. The display element 10 can additionally have an optical element, which has an electrochromic material. The translucency of the display element 10 can be adapted by the optical element. In particular, the translucency can be adapted such that the display element 10 is opaque during the autonomous drive mode.

Presently, the display device 4 is disposed in a central viewing area of the driver of the motor vehicle 1. The environmental display devices 5 are disposed in a peripheral field of view of the driver. Thus, the driver can view screen contents on the display device 4 during the autonomous drive mode of the motor vehicle 1. In the peripheral field of view, image data or video data is displayed to the driver by means of the environmental display devices 5, which describes the environmental region 9. In this manner, the driver can peripherally perceive the environment or the environmental region 9. Thereby, in particular the motion sickness can be reduced or prevented at the driver. In addition, it can be achieved that the driver is informed about the environment of the motor vehicle 1. Thus, the driver is aware of the environment. Further, the attention of the driver can be increased.

## Claims

1. Method for operating a driver assistance system (2) of a motor vehicle (1), in which the motor vehicle (1) is autonomously maneuvered in an autonomous drive mode by means of the driver assistance system (2) and display data is displayed to the driver of the motor vehicle (1) by means of a display device (4), wherein the display data is displayed to the driver in a central field of view upon viewing the display device (4), **characterized in that**
an environmental region (9) of the motor vehicle (1) is captured by means of a sensor device (6) and environmental data is additionally displayed to the driver by means of two environmental display devices (5), which describes the environmental region (9) captured by the sensor device (6), wherein the environmental data is displayed to the driver in a peripheral field of view upon viewing the display device (4), and wherein the two environmental display devices (5) are disposed symmetrically on the right and left side of a steering wheel (11) and at the height of the steering wheel (11).

2. Method according to claim 1,
**characterized in that**
the sensor device (6) has at least one camera (7, 8), by means of which a sequence of image data of the environmental region (9) is captured and the sequence of image data is displayed on the two environmental display devices (5) as the environmental data.

3. Method according to claim 2,
**characterized in that**
the sensor device (6) has a front camera (8) as the at least one camera (7, 8), by means of which a sequence of image data of the environmental region (9) in front of the motor vehicle (1) is captured, and/or the sensor device (6) has at least one lateral camera (7) as the at least one camera (7, 8), by means of which a sequence of image data of the environmental region (9), which is substantially laterally next to the motor vehicle (1), is captured.

4. Method according to any one of the preceding claims,
**characterized in that**
the sensor device (6) includes a radar sensor, a laser sensor and/or an ultrasonic sensor and the environmental data describes at least one object in the environmental region (9) captured by the sensor device (6).

5. Method according to any one of the preceding claims,
**characterized in that**
the driver assistance system (2) includes a head-up display device, wherein for displaying the display data and/or the environmental data, light is projected onto a display element (10) and wherein a translucency of the display element (10) is adjustable by means of an optical element.

6. Method according to claim 5,
**characterized in that**
the head-up display device has a first area and at least one second area, wherein the display data is displayed in the first area and the environmental data is displayed in the at least one second area.

7. Method according to any one of the preceding claims,
**characterized in that**
the display device (4) is connected to a mobile apparatus for data transmission.

8. Method according to any one of the preceding claims,
**characterized in that**
an intervention in a steering, a brake system and a drive engine of the motor vehicle (1) is performed by means of the driver assistance system (2) for autonomously maneuvering the motor vehicle (1).

9. Method according to any one of the preceding claims, **characterized in that**
a display is additionally provided during a manual drive mode of the motor vehicle (1) by means of the display device (4).

10. Driver assistance system (2) for a motor vehicle (1), which is adapted to perform a method according to any one of the preceding claims.

11. Motor vehicle (1) with a driver assistance system (2) according to claim 10.

## Patentansprüche

1. Verfahren zum Betreiben eines Fahrerassistenzsystems (2) eines Kraftfahrzeugs (1), wobei das Kraftfahrzeug (1) autonom in einem autonomen Fahrmodus mittels des Fahrerassistenzsystems (2) manövriert wird und Anzeigedaten dem Fahrer des Kraftfahrzeugs (1) mittels einer Anzeigevorrichtung (4) angezeigt werden, wobei die Anzeigedaten dem Fahrer bei Betrachten der Anzeigevorrichtung (4) in einem zentralen Sichtfeld angezeigt werden, **dadurch gekennzeichnet, dass**
ein Umgebungsbereich (9) des Kraftfahrzeugs (1) mittels einer Sensorvorrichtung (6) erfasst wird und Umgebungsdaten dem Fahrer zusätzlich mittels zwei Umgebungsanzeigevorrichtungen (5) angezeigt werden, die den durch die Sensorvorrichtung (6) erfassten Umgebungsbereich (9) beschreiben, wobei die Umgebungsdaten dem Fahrer bei Betrachten der Anzeigevorrichtung (4) in einem peripheren Sichtfeld angezeigt werden, und wobei die zwei Umgebungsanzeigevorrichtungen (5) symmetrisch an der rechten und linken Seite eines Lenkrads (11) und in einer Höhe des Lenkrads (11) angeordnet sind.

2. Verfahren nach Anspruch 1,
**dadurch gekennzeichnet, dass**
die Sensorvorrichtung (6) mindestens eine Kamera (7, 8) aufweist, mittels derer eine Abfolge von Bilddaten des Umgebungsbereichs (9) erfasst wird, und wobei die Abfolge von Bilddaten auf den zwei Umgebungsanzeigevorrichtungen (5) als die Umgebungsdaten angezeigt wird.

3. Verfahren nach Anspruch 2,
**dadurch gekennzeichnet, dass**
die Sensorvorrichtung (6) eine vordere Kamera (8) als die mindestens eine Kamera (7, 8) aufweist, mittels derer eine Abfolge von Bilddaten des Umgebungsbereichs (9) vor dem Kraftfahrzeug (1) erfasst wird, und/oder die Sensorvorrichtung (6) mindestens eine seitliche Kamera (7) als die mindestens eine Kamera (7, 8) aufweist, mittels derer eine Abfolge von Bilddaten des Umgebungsbereichs (9), der im Wesentlichen seitlich neben dem Kraftfahrzeug (1) ist, erfasst wird.

4. Verfahren nach einem der vorhergehenden Ansprüche, **dadurch gekennzeichnet, dass**
die Sensorvorrichtung (6) einen Radarsensor, einen Lasersensor und/oder einen Ultraschallsensor umfasst und die Umgebungsdaten mindestens ein Objekt in dem Umgebungsbereich (9) beschreiben, das durch die Sensorvorrichtung (6) erfasst wurde.

5. Verfahren nach einem der vorhergehenden Ansprüche, **dadurch gekennzeichnet, dass**
das Fahrerassistenzsystem (2) eine Head-Up-Anzeigevorrichtung umfasst, wobei zum Anzeigen der Anzeigedaten und/oder der Umgebungsdaten Licht auf ein Anzeigeelement (10) projiziert wird, und wobei eine Lichtdurchlässigkeit des Anzeigeelements (10) mittels eines optischen Elements einstellbar ist.

6. Verfahren nach Anspruch 5,
**dadurch gekennzeichnet, dass**
die Head-Up-Anzeigevorrichtung einen ersten Bereich und mindestens einen zweiten Bereich aufweist, wobei die Anzeigedaten in dem ersten Bereich angezeigt werden und die Umgebungsdaten in dem mindestens einen zweiten Bereich angezeigt werden.

7. Verfahren nach einem der vorhergehenden Ansprüche, **dadurch gekennzeichnet, dass**
die Anzeigevorrichtung (4) mit einem Mobilgerät zur Datenübertragung verbunden ist.

8. Verfahren nach einem der vorhergehenden Ansprüche, **dadurch gekennzeichnet, dass**
ein Eingriff in eine Lenkung, ein Bremssystem und einen Antriebsmotor des Kraftfahrzeugs (1) mittels des Fahrerassistenzsystems (2) zum autonomen Manövrieren des Kraftfahrzeugs (1) durchgeführt wird.

9. Verfahren nach einem der vorhergehenden Ansprüche, **dadurch gekennzeichnet, dass**
eine Anzeige zusätzlich während eines manuellen Fahrmodus des Kraftfahrzeugs (1) mittels der Anzeigevorrichtung (4) bereitgestellt wird.

10. Fahrassistenzsystem (2) für ein Kraftfahrzeug (1), das ausgelegt ist, ein Verfahren nach einem der vorhergehenden Ansprüche auszuführen.

11. Kraftfahrzeug (1) mit einem Fahrassistenzsystem (2) nach Anspruch 10.

## Revendications

1. Procédé de fonctionnement d'un système d'aide à la conduite (2) d'un véhicule motorisé (1), le véhicule motorisé (1) étant manœuvré de manière autonome dans un mode de conduite autonome au moyen du système d'aide à la conduite (2) et des données d'affichage étant affichées au conducteur du véhicule motorisé (1) au moyen d'un dispositif d'affichage (4), les données d'affichage étant affichées au conducteur dans un champ de vision central lors de la consultation du dispositif d'affichage (4),
**caractérisé en ce que**
une région ambiante (9) du véhicule motorisé (1) est capturée au moyen d'un dispositif capteur (6) et des données ambiantes sont également affichées au conducteur au moyen de deux dispositifs d'affichage ambiant (5), lesquelles décrivent la région ambiante (9) capturée par le dispositif capteur (6), les données ambiantes étant affichées au conducteur dans un champ de vision périphérique lors de la consultation du dispositif d'affichage (4), et les deux dispositifs d'affichage ambiant (5) étant placés symétriquement à droite et à gauche d'un volant de direction (11) et à la hauteur du volant de direction (11).

2. Procédé selon la revendication 1,
**caractérisé en ce que**
le dispositif capteur (6) est pourvu d'au moins une caméra (7, 8), au moyen de laquelle une séquence de données d'image de la région ambiante (9) est capturée, et la séquence de données d'image est affichée sur les deux dispositifs d'affichage ambiant (5) à titre des données ambiantes.

3. Procédé selon la revendication 2,
**caractérisé en ce que**
le dispositif capteur (6) est pourvu d'une caméra avant (8) à titre de l'au moins une caméra (7, 8), au moyen de laquelle une séquence de données d'image de la région ambiante (9) devant le véhicule motorisé (1) est capturée, et/ou le dispositif capteur (6) est pourvu d'au moins une caméra latérale (7) à titre de l'au moins une caméra (7, 8), au moyen de laquelle une séquence de données d'image de la région ambiante (9), sensiblement latéralement proche du véhicule motorisé (1), est capturée.

4. Procédé selon l'une quelconque des revendications précédentes,
**caractérisé en ce que**
le dispositif capteur (6) comporte un capteur radar, un capteur laser et/ou un capteur à ultrasons, et les données ambiantes décrivent au moins un objet dans la région ambiante (9) capturée par le dispositif capteur (6) .

5. Procédé selon l'une quelconque des revendications précédentes,
**caractérisé en ce que**
le système d'aide à la conduite (2) comporte un dispositif d'affichage tête haute ; pour l'affichage des données d'affichage et/ou des données ambiantes, de la lumière étant projetée sur un élément d'affichage (10) et une translucidité de l'élément d'affichage (10) étant réglable au moyen d'un élément optique.

6. Procédé selon la revendication 5,
**caractérisé en ce que**
le dispositif d'affichage tête haute est pourvu d'une première zone et d'au moins une deuxième zone, les données d'affichage étant affichées dans la première zone et les données ambiantes étant affichées dans l'au moins une deuxième zone.

7. Procédé selon l'une quelconque des revendications précédentes,
**caractérisé en ce que**
le dispositif d'affichage (4) est connecté à un appareil mobile pour la transmission de données.

8. Procédé selon l'une quelconque des revendications précédentes,
**caractérisé en ce que**
une intervention au niveau d'une direction, d'un système de freinage et d'un moteur d'entraînement du véhicule motorisé (1) est réalisée au moyen du système d'aide à la conduite (2) pour la manœuvre autonome du véhicule motorisé (1).

9. Procédé selon l'une quelconque des revendications précédentes,
**caractérisé en ce que**
un affichage est également fourni au cours d'un mode de conduite manuelle du véhicule motorisé (1) au moyen du dispositif d'affichage (4).

10. Système d'aide à la conduite (2) pour un véhicule motorisé (1), adapté à réaliser un procédé selon l'une quelconque des revendications précédentes.

11. Véhicule motorisé (1) équipé d'un système d'aide à la conduite (2) selon la revendication 10.
